Europäisches Patentamt

European Patent Office

Office européen des brevets

(11) Publication number: **0 376 172 B1**

# EUROPEAN PATENT SPECIFICATION

(45) Date of publication of patent specification: **25.08.93** (51) Int. Cl.⁵: **B60C 15/06**

(21) Application number: **89123697.8**

(22) Date of filing: **21.12.89**

(54) **Pneumatic radial tire.**

(30) Priority: **30.12.88 JP 334897/88**

(43) Date of publication of application:
**04.07.90 Bulletin 90/27**

(45) Publication of the grant of the patent:
**25.08.93 Bulletin 93/34**

(84) Designated Contracting States:
**DE FR GB LU**

(56) References cited:
**US-A- 4 508 153**

**PATENT ABSTRACTS OF JAPAN, unexamined applications, M section, vol. 3, no. 112, September 18, 1979 page 128 M 73**

(73) Proprietor: **THE YOKOHAMA RUBBER CO., LTD.**
**36-11, Shinbashi 5-chome Minato-ku Tokyo, 105(JP)**

(72) Inventor: **Hanada, Ryoji**
**490, Tokunobu**
**Hiratsuka-shi Kanagawa-ken(JP)**
Inventor: **Misawa, Makoto**
**36-7, Nishihara 1-chome Shibuya-ku Tokyo(JP)**

(74) Representative: **Weber, Dieter, Dr. et al**
**Weber, Dieter, Dr., Seiffert, Klaus, Dipl.-Phys., Lieke, Winfried, Dr., Postfach 61 45, Gustav-Freytag-Strasse 25 D-65051 Wiesbaden (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a pneumatic radial tire, and more specifically, a pneumatic radial tire having improved performances with respect to both of the resistance to a bead detachment from rim when the tire is run in an insufficiently inflated condition and the steering stability when the tire is run continuously at a high speed.

Generally in conventional pneumatic radial tires for passenger cars, their bead-toe portion is formed as a result of a liner rubber and a cord coating rubber flowing into and collecting in that portion during the tire molding process, and conventionally it has not been practiced to make use of a particular rubber solely for the formation of the bead-toe portion. This means that there has not been a sufficient measure taken for preventing a bead detachment from rim or bead-rim disengagement from occurring when the tire is run in a condition thereof having a subnormal inflation pressure or a lower inflation pressure than the prescribed normal value. Then, as means for the prevention of the bead detachment, it is proposed in Japanese patent application Kokai publication No. 54-88501 (corresponding to the preamble of claim 1) to incorporate a hard rubber in the bead-toe portion. This measure has proved to attain a fairly remarkable effect in preventing the bead detachment, but it has not brought about an improvement in or relating to the steering stability when the tire is kept running at a high speed.

In greater detail, on the one hand, when they are continuously run at a high speed, tires are prone to undergo a temperature rise due to their own generation of heat and also on account of their being subjected to heat generated by brake members. On the other hand, rubbers generally tend to lower their original hardness as the temperature is higher even if they have a high hardness at room temperature. Therefore, at the time of cornering during running of tires, a phenomenon is likely in tires such that the bead portion undergoes a partial floating detachment from rims on which they are mounted and becomes movable relatively with ease, resulting in a lowering of the lateral rigidity and accordingly the steering stability of the tires.

The object of the present invention is to provide a pneumatic radial tire having improved characteristics with respect to both of the resistance to the bead detachment from rim at the time the tire is running in an insufficiently inflated condition and the steering stability at the time of a continuous high-speed running.

This object is achieved by the features of claim 1.

The pneumatic radial tire according to the invention has the structural characteristic in which a hard rubber layer having a very low susceptivity to a thermal influence is incorporated in at least a bead-toe region lying between a bead core and a bead toe in the bead portion. In addtion, according to the invention, the hard rubber has the characteristics represented by a dynamic modulus of elasticity at 20° C, E'-20° C, within a range of 5.0 to 11.0 MPa, and also a ratio of a dynamic modulus of elasticity at 60° C, E'-60° C, to the above E'-20° C, namely E'-60° C/ E'-20° C, of at least 0.8.

By incorporating a hard rubber having a low susceptivity to thermal influence in the bead-toe region as above, it is possible to prevent a bead detachment from occurring when tires are run in an insufficiently inflated condition. Also, even if the tire temperature becomes raised during a continuous high-speed running of the tire, the hard rubber undergoes almost no change in its original hardness, so that it is possible to prevent the lateral rigidity of the tire from lowering and maintain the steering stability intact.

In or for the present invention, the dynamic modulus of elasticity of a rubber, E', means the dynamic storage modulus of the rubber determinable on a viscoelasticity spectrometer (commercially obtainable at for example Iwamoto Seisakusho K.K., Japan), at respective prescribed temperatures and under the load condition in which a test sample of rubber is applied with an initial strain of 10 % and then with a dynamic strain of a frequency of 20 Hz and an amplitude of ± 2 % (or 8 to 12 % of the original length of the test sample). The modulus values found at 20° C are shown by E'-20° C, while those found at 60° C are shown by E'-60° C.

Fig. 1 shows a meridian sectional view of an embodiment of pneumatic radial tires according to the present invention;

Fig. 2 is an enlarged partial sectional view, showing the bead portion of the tire of Fig. 1; and

Fig. 3 is a schematic plan view, diagramatically showing the J-letter shaped running test course used in the carrying out of evaluations of test tires with respect to their resistances to the bead detachment from rim.

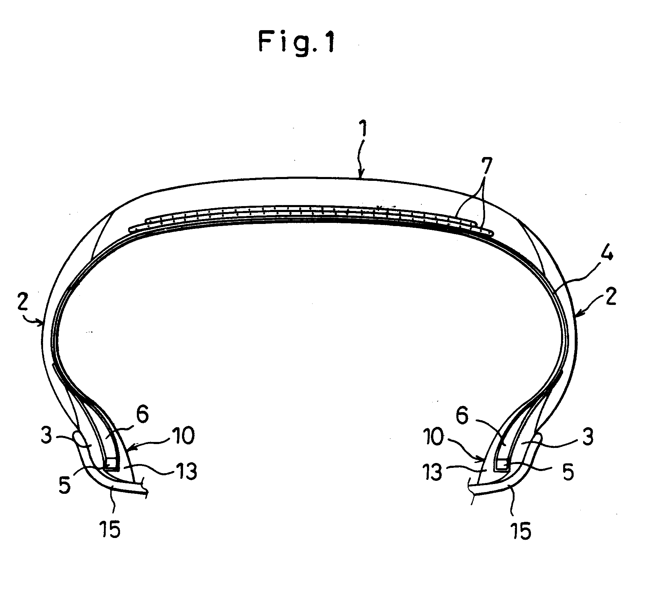

In or for the present invention, radial tires have a sectional structure for example as shown in Fig. 1 of the accompanying drawings. The illustrated typical example of radial tires is essentially composed of a pair of a left bead portion 10 and a right bead portion 10 each having a bead core 5 embedded therein, a pair of a left side-wall portion 2 and a right side-wall portion 2 continuous to the left and the right bead portions 10 and 10 respectively, and a tread portion 1 connecting the pair of side-wall portions 2 and 2 to each other.

On the inner side of the tire, a carcass 4 is arranged, which comprises at least a single carcass layer and each end portion of which is turned up from the inner side to the outer side of the bead core 5 in a manner of enrobing a bead filler 6. In the tread portion 1, at least two belt layers 7 are disposed in a cord arrangement such that the belt cords of one layer cross those of the other layer. The reference numeral 15 denotes a rim on which the radial tire is mounted.

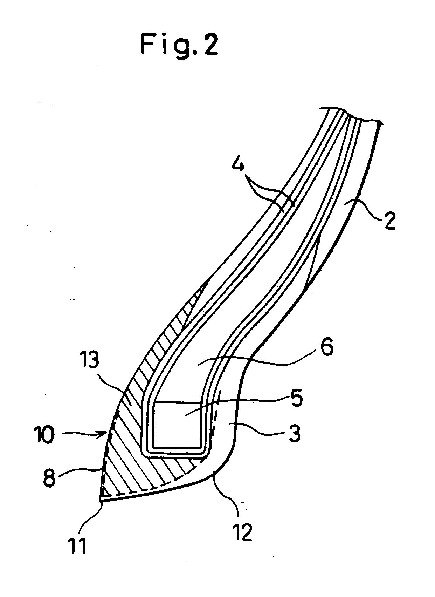

In the bead portion 10 shown in an enlarged scale in Fig. 2, an inner lower corner portion consists of a bead toe 11, while an outer lower corner portion is a bead heel 12. In a bead-toe region lying between the bead core 5 and the bead toe 11 in the bead portion 10, there is incorporated a hard rubber layer 13 having a low susceptivity to thermal influence. It may be sufficient if this hard rubber layer 13 is incorporated in at least such a limited region as lying immediately between the bead core 5 and the bead toe 11. More preferably, however, the hard rubber should be present not only in such limited region but also in an expanded region radially outwardly of the outer periphery of the bead core, along the inner surface of the carcass 4 as shown in Fig. 2 so that the object of the invention can be further advantageously met.

As needs be, it is possible to further provide a reinforcing layer 8 of a fiber fabric in a portion of the outer surface of the bead-toe region. However, it is not always necessary to provide this reinforcing layer 8, which may be incorporated only in case of need.

In a bead-heel region 3 lying between the bead core and the bead heel 12, a rim cushion rubber is disposed.

As described above, in the radial tire according to the invention, a hard rubber layer 13 is disposed in at least a bead-toe region lying between the bead core and the bead toe, whereby the rigidity in the bead portion is increased to thereby prevent from occurring the otherwise likely bead detachment from rim at the time of cornering when the tire is run in a condition thereof having a subnormal inflation pressure, namely a lower inflation pressure than the prescribed normal value.

When a tire is started running, the temperature inside the tire undergoes a gradual rise, and according thereto, the pressure inside the tire becomes increased, so that in most cases the generation of a bead detachment takes place during an intial period of time after the initiation of running and before the tire internal temperature becomes raised. Therefore, according to the invention, it is defined that the hard rubber layer 13 to be incorporated in the bead-toe region in radial tires should have a dynamic modulus at 20° C, $E'$-20° C, within a range of 5.0 to 11.0 MPa. If this $E'$-20° C is smaller than 5.0 MPa, the rigidity in the bead-toe region tends to be insufficient and it is then impossible to realize a desirable resistance to the bead detachment from rim or the bead-rim disengagement, while if it is larger than 11.0 MPa, then the rigidity in the bead portion tends to be so high that it becomes difficult to mount the tire on a rim.

On the other hand, in order to improve also the steering stability at the time of a continuous high-speed running, it is necessary to meet that even if the tire temperature becomes relatively high as the tire is run, the hardness of the hard rubber in the bead-toe region will not lower. For this, in the radial tire according to the invention, in addition to that the hard rubber in the bead-toe region has the characteristic answering the above requirement concerning the $E'$-20° C, it is required that the hard rubber has the characteristic that it has a dynamic modulus at 60° C, $E'$-60° C, which is at least 0.8 times the above $E'$-20° C. That is to say, the hard rubber for use should be such a one as having a very small susceptivity to influence of heat and having a ratio of $E'$-60° C to $E'$-20° C, $E'$-60° C/$E'$-20° C, of at least 0.8. If this ratio $E'$-60° C/$E'$-20° C is smaller than 0.8, it tends to be difficult to maintain a desirable steering stability at the time of a continuos high-speed running for reasons as described above.

Rubber compositions satisfying above requirements on the dynamic modulus of elasticity or the dynamic storage modulus may be obtained by blending various additives such as carbon black, vulcanization accelerator and so forth in one or more of rubber components such as natural rubber (NR), acrylonitrile-butadiene rubber (NBR), isoprene rubber (IR), butadiene rubber (BR), styrene-butadiene rubber (SBR) and isobutylene-isoprene rubber (IIR). It is possible to appropriately selectively combine together for use particular types of the rubber components and of the additives, and similarly selectively determine the blending ratios thereof.

Now, the present invention will be described in greater detail, particularly with respect to the results/effect thereof, in conjunction with examples.

Examples:

There were prepared three different rubber compositions A, B and C having respective blending specifications as shown in the below Table 1, and incorporating the compositions A, B and C respectively in the bead-toe region of radial tires of a tire structure as shown in Fig. 1, there were built a tire of the invention, a comparative tire I and a comparative tire II.

The tires had a same tire size of 195/65 VR 15, the following described belt layers and carcass, and a fiber reinforcing layer comprising a plain-weave nylon fabric provided in a portion of the outer surface of the bead-toe region.

Belt Layer: 2 rubberized layers having steel cords of a 1 x 5(0.25) twist structure, in a cord density of 40 cords/50 mm and in a bias arrangement at 24° to the circumferential direction of the tire

Carcass: a single layer having 1,000 D/2 polyester fiber cords, in a cord density of 55 cords/50 mm and at a cord angle of substantially 90° to the tire circumferential direction

## Table 1

|  | A | B | C |
|---|---|---|---|
| **Blended Components** | | | |
| Natural Rubber | 50 | 70 | 50 |
| SBR [1] | -- | 30 | 50 |
| BR [2] | 50 | -- | -- |
| Zinc Oxide | 5 | 5 | 5 |
| Stearic Acid | 2 | 2 | 2 |
| Antiaging Agent [3] | 1 | 1 | 1 |
| HAF Carbon Black | 75 | 75 | 75 |
| Process Oil | 23 | 35 | 23 |
| Sulfur | 3.0 | 3.0 | 3.0 |
| Vulcanization Accelerator [4] | 1.2 | 1.2 | 1.2 |
| E-20° C | 9.0 | 6.5 | 8.4 |
| E-60° C | 8.0 | 5.0 | 6.1 |
| E-60° C/E-20° C | 0.89 | 0.77 | 0.73 |

Notes:

Amounts of the components are by parts by weight and the dynamic modolus values are by MPa;

[1]: styrene-butadiene rubber (Nipol 1502, a product of Nippon Zeon K.K.);

[2]: polybutadiene rubber (Nipol 1220, a product of Nippon Zeon K.K.);

[3]: N-(1,3-dimethylbutyl)-N'-phenyl-p-phenylene diamine; and

[4]: N-oxydiethylene-2-benzothiazylsulfenamide

The respective tires were mounted on a rim of a size of 6 1/2JJ x 15 and subjected to tests for the evaluation of tires with respect to the resistance to the bead detachment, on a J-letter shaped cornering test course, and also to a slalom test for the evaluation of the steering stability as described below.

4

J-letter shaped cornering test:

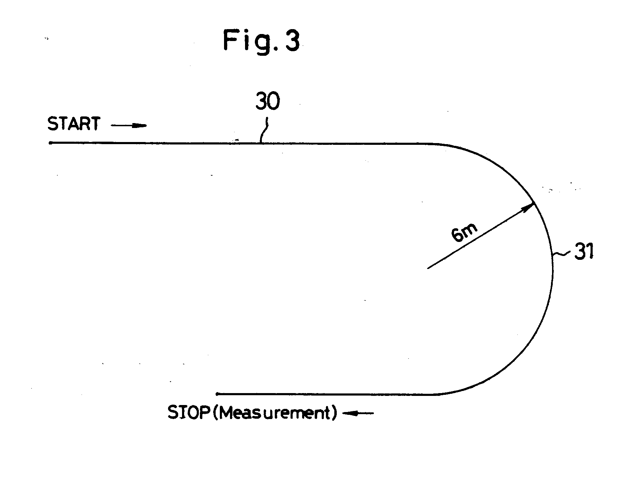

The respective test tires were mounted on a test car (passenger car) and subjected to a cornering test at a velocity of 35.5 km/hr on a J-letter shaped running test course as shown in Fig. 3, comprising a rectilinear course part 30 and a semi-circular course part 31 having a radius of 6 m, continuous from the rectilinear course part 30. The tests were carried out in a manner such that the inflation pressure of the tire mounted on the front left wheel of the test car was step-wise reduced from 2.0 kg/cm$^2$ each time by 0.1 kg/cm$^2$, and the inflation pressure values at which a rim touch or a bead detachment from the rim took place were determined.

Tests were conducted 5 times for each of the above varied inflation pressure values, and for a rating of the tires, reciprocal numbers of the inflation pressure values at the time of the generation of the rim touch or the bead detachment are shown in indices with the values found of the comparative tire I taken as 100. A larger value (index) means a higher and more desirable resistance to the bead detachment.

Slalom running test:

Respective test tires mounted on test cars were subjected to a high-speed warm-up running for about 30 minutes to raise the tire temperature, and immediately thereafter, to a slalom test running on a rectiliner asphalt pavement provided with 5 traffic cones arranged at intervals of 30 m. The required time for the running through of the test course was determined, and the results are shown in terms of indices with the value found of the comparative tire I taken as 100. A smaller value (index) means a higher and a more desirable steering stability.

The results of the above J-letter shaped cornering tests and slalom running tests are shown in the following Table 2.

Table 2

| | Tire of Invention | Comparative Tire I | Comparative Tire II |
|---|---|---|---|
| Rubber Composition in Table 1 | A | B | C |
| J-letter Shaped Cornering Test | 130 | 100 | 110 |
| Slalom Running Test | 95 | 100 | 99 |

From the above Table 2, it is seen that in comparison to the comparative tire I, the tire of the present invention has conspicuously improved characteristics with respect to both of the resistance to the bead detachment and the steering stability. In contrast to this, the comparative tire II shows almost no improvement with respect to the steering stability, even though it shows an improvement in or relating to the bead detachment, when compared with the comparative tire I.

## Claims

1. A pneumatic radial tire comprising left and right bead portions (10) each having a bead core (5) and at least a single layer carcass (4) having its end portions turned up from the inside to the outside of the tire in a manner of enrobing the bead cores (5), wherein at least in the bead-toe region laying between the bead core (5) and a bead toe (11) in the bead portion (10) a hard rubber layer (13) is incorporated, characterized in that said hard rubber layer (13) has a dynamic modulus of elasticity at 20°C, E-20°C, within a range of 5.0 to 11.0 MPa and a ratio of a dynamic modulus of elasticity at 60°C, E-60°C, to the above E-20°C, E-60°C/E-20°C, of at least 0.8.

2. A pneumatic radial tire as claimed in claim 1, wherein the hard rubber layer (13) incorporated in the bead-toe region extends radially outwardly beyond the outer periphery of the bead core (5), along the carcass (4) on the inner side of the bead core.

3. A pneumatic radial tire as claimed in claim 1, wherein an outer surface portion of the bead-toe region is covered with a reinforcing layer (8) comprising a fiber fabric.

EP 0 376 172 B1

**4.** A pneumatic radial tire as claimed in claim 1, wherein in a bead-heel region (3) in the bead portion (10), a rim cushion rubber is incorporated.

**5.** A pneumatic radial tire as claimed in claim 1, which is for passenger cars.

## Patentansprüche

**1.** Druckluftradialreifen mit linken und rechten Wulstabschnitten (10), die jeweils einen Wulstkem (5) und zumindest eine einschichtige Karkasse (4) haben, die mit ihren Endabschnitten von der Innenseite des Reifens her nach außen hochgeschlagen ist, so daß sie die Wulstkerne (5) umhüllt, wobei zumindest in dem Wulstspitzenbereich, der zwischen dem Wulstkern (5) und einer Wulstspitze (11) in dem Wulstabschnitt (10) liegt, eine Hartgummischicht (13) aufgenommen ist, dadurch gekennzeichnet, daß die Hartgummischicht (13) einen dynamischen Elastizitätsmodul bei 20°C, E'-20°C, in einem Bereich von 5,0 bis 11,0 MPa und ein Verhältnis des dynamischen Elastizitätsmoduls bei 60°C, E'-60°C zu dem obigen E'-20°C, E'-60°C/E'-20°C, von zumindest 0,8 hat.

**2.** Druckluftradialreifen nach Anspruch 1, wobei die Hartgummischicht (13), welche in dem Wulstspitzenbereich aufgenommen ist, sich in radialer Richtung nach außen über den äußeren Umfang des Wulstkernes (5), entlang der Karkasse (4) auf der Innenseite des Wulstkernes erstreckt.

**3.** Druckluftradialreifen nach Anspruch 1, wobei ein äußerer Oberflächenabschnitt des Wulst-Spitzenbereiches mit einer Verstärkungsschicht (8) abgedeckt ist, welche ein Fasergewebe aufweist.

**4.** Druckluftradialreifen nach Anspruch 1, wobei in einem Wulstfersenbereich (3) in dem Wulstabschnitt (10) ein Felgenpolstergummi eingearbeitet ist.

**5.** Druckluftradialreifen nach Anspruch 1, dadurch gekennzeichnet, daß er für Personenkraftwagen vorgesehen ist.

## Revendications

**1.** Bandage pneumatique radial comprenant des portions de bandelette gauche et droite (10) avec chacune un corps de bandelette (5) ainsi qu'au moins une carcasse à couche unique (4) ayant ses portions d'extrémités retournées vers le haut depuis l'intérieur vers l'extérieur du bandage, de manière à enrober les corps de bandelettes (5), dans lequel au moins dans la région d'embout de bandelette qui s'étend entre le corps de bandelette (5) et un embout de bandelette (11) dans la portion de bandelette (10), une couche de caoutchouc dur (13) est incorporée, caractérisé en ce que ladite couche de caoutchouc dur (13) possède un module dynamique d'élasticité à 20°C, E'-20°C, compris dans une plage entre 5,0 et 11,0 MPa, ainsi qu'un rapport de module dynamique d'élasticité à 60°C, E'-60°C sur le module E'-20°C ci-dessus, tel que E'-60°C/E'-20°C est au moins égal à 0,8.

**2.** Bandage pneumatique radial selon la revendication 1, dans lequel la couche de coutchouc dur (13) incorporée dans la région d'embout de bandelette s'étend radialement vers l'extérieur au-delà de la périphérie externe du corps de bandelette (5), le long de la carcasse (4) sur le côté interne du corps de bandelette.

**3.** Bandage pneumatique radial selon la revendication 1, dans lequel une portion de surface externe de la région d' embout de bandelette est recouverte avec une couche de renforcement (8) qui comprend un tissu à base de fibre.

**4.** Bandage pneumatique radial selon la revendication 1, dans une région de talon de bandelette (3) de la portion de bandelette (10) duquel, un caoutchouc d'amortissement de jante est incorporé.

**5.** Bandage pneumatique radial selon la revendication 1, pour un véhicule à passagers.

6

# Fig.1

## Fig.2

# Fig. 3

START →

30

6m

31

STOP (Measurement) ←